# EUROPEAN PATENT APPLICATION

(11) **EP 4 782 398 A1**
(43) Date of publication of application: **29.07.2026**
(21) Application number: 26153223.8
(22) Date of filing: 21.01.2026
(51) Int. Cl.: C01B 32/05, H01M 4/133

(54) **NEGATIVE ELECTRODE HETEROATOM-DOPED CARBON MATERIAL, METHOD OF MANUFACTURING AND BATTERY NEGATIVE ELECTRODE THEREOF**

(30) Priority: 23.01.2025 TW 114103162
(71) Applicant: Hon Hai Precision Industry Co., Ltd., 236038 New Taipei City (TW); SolidEdge Solution Inc., Hsinchu City 300094 (TW)
(72) Inventor: CHEN, Wei-Chao, 300094 Hsinchu City (TW); WANG, Pin-Han, 300094 Hsinchu City (TW); CHANG, Tseng-Lung, 300094 Hsinchu City (TW)
(74) Representative: Winter, Brandl - Partnerschaft mbB

(57) **Abstract**

Embodiments of the present disclosure provide a negative electrode heteroatom-doped carbon material. The negative electrode heteroatom-doped carbon material includes carbon element, nitrogen element, and oxygen element. A weight percentage of the carbon element is in a range from 77% to 81%, a weight percentage of the nitrogen element is in a range from 8% to 12%, and a weight percentage of the oxygen element is in a range from 4% to 6.5%, based on a total weight of the negative electrode heteroatom-doped carbon material being 100%.

## Description

### BACKGROUND

### Field of Invention

The present disclosure relates to a negative electrode heteroatom-doped carbon material, a method of manufacturing the same and a battery negative electrode thereof.

### Description of Related Art

In recent years, the vigorous development of electric vehicles and electronic products has led to an increasing demand for lithium-ion batteries. A material of graphite is used as a negative electrode in a common lithium-ion battery. Moreover, in the in lithium-ion battery, lithium ions migrate into the graphite to form LiC₆ graphite. However, a theoretical capacity of the lithium-ion battery using the graphite as the negative electrode is simply 372 milliamp-hours/g. In addition, since there are many non-polar bonds (such as C=C bonds, C-H bonds) in the functional groups on a surface of the graphite, the non-polar bonds make the surface of the graphite more hydrophobic, resulting in the material of the graphite as the negative electrode being difficult to mix with aqueous colloid.

Therefore, the present disclosure provides a heteroatom-doped carbon material, a method of manufacturing the same and an application thereof.

### SUMMARY

Some embodiments of the present disclosure provide a method of manufacturing a negative electrode heteroatom-doped carbon material, including the following steps. A biological protein material is provided, and the biological protein material is an organic compound and includes carbon element, hydrogen element, oxygen element and nitrogen element. The biological protein material is hydrolyzed in an alkaline solution to form a plurality of short-chain biological proteins. The plurality of short-chain biological proteins are washed until a pH value of the plurality of short-chain biological proteins becomes neutral. The plurality of short-chain biological proteins are placed into a reaction chamber with a temperature for heating, and introducing a mixed gas into the reaction chamber until forming the negative electrode heteroatom-doped carbon material including a structural defect, wherein the mixed gas includes nitrogen gas and hydrogen gas.

In some embodiments, the negative electrode heteroatom-doped carbon material includes the doped nitrogen element and the doped oxygen element.

In some embodiments, the alkaline solution includes a sodium carbonate aqueous solution or a sodium hydroxide aqueous solution.

In some embodiments, a percentage of the nitrogen gas in the mixed gas is in a range from 80% to 95%, and a percentage of the hydrogen gas in the mixed is in a range from 5% to 20%.

In some embodiments, the temperature is in a range from 600°C to 850°C.

In some embodiments, the biological protein material includes silk, wool, spider silk, yeast, soybean protein, corn protein, related animal and plant proteins, or combinations thereof.

Other embodiments of the present disclosure provide a negative electrode heteroatom-doped carbon material, including carbon element, nitrogen element and oxygen element. Based on a total weight of the negative electrode heteroatom-doped carbon material being 100%, a weight percentage of the carbon element is in a range from 77% to 81%, a weight percentage of the nitrogen element is in a range from 8% to 12%, and a weight percentage of the oxygen element is in a range from 4% to 6.5%.

In some embodiments, based on the total weight of the negative electrode heteroatom-doped carbon material being 100%, the weight percentage of the carbon element is in the range from 80% to 81%, the weight percentage of the nitrogen element is 12%, and the weight percentage of the oxygen element is 6%.

In some embodiments, the negative electrode heteroatom-doped carbon material further includes hydrogen element, and a weight percentage of the hydrogen element is in a range from 1% to 1.5%.

In some embodiments, any one of the carbon element, the nitrogen element and the oxygen element and any one of the carbon element, the nitrogen element and the oxygen element bond with each other to form a polar bond.

In some embodiments, the polar bond includes C=N bond, N-O bond, C-O bond, C-N bond or a combination thereof.

In some embodiments, any one of the carbon element, the nitrogen element and the oxygen element and any one of the carbon element, the nitrogen element and the oxygen element bond with each other to form a ring structure.

In some embodiments, the ring structure includes a five-ring structure, a seven-ring structure or a combination thereof.

In some embodiments, the negative electrode heteroatom-doped carbon material includes a structural defect.

In some embodiments, an average particle size of the negative electrode heteroatom-doped carbon material is in a range from 4 micrometers to 8 micrometers.

Still other embodiments of the present disclosure provide a battery negative electrode, including the negative electrode heteroatom-doped carbon material.

In some embodiments, the battery negative electrode further includes aqueous colloid and conductive carbon black. The aqueous colloid, the conductive carbon black and the negative electrode heteroatom-doped carbon material are mixed to form a negative electrode slurry.

In some embodiments, a weight ratio of the negative electrode heteroatom-doped carbon material, the conductive carbon black and the aqueous colloid is 48:1:1.

In some embodiments, the negative electrode slurry is coated on a substrate, and a coating thickness of the negative electrode slurry is in a range from 50 micrometers to 100 micrometers.

In some embodiments, the aqueous colloid includes carboxymethyl cellulose.

### BRIEF DESCRIPTION OF THE DRAWINGS

Fig. 1 is a flow chart of a method of manufacturing a negative electrode heteroatom-doped carbon material according some embodiments of the present disclosure.
Fig. 2A is an X-ray diffraction (XRD) pattern of a negative electrode heteroatom-doped carbon material of various Embodiments and Control example of the present disclosure.
Fig. 2B is a Raman spectrum pattern of a negative electrode heteroatom-doped carbon material of various Embodiments and Control example of the present disclosure.
Fig. 3 is a Fourier transform infrared spectrum pattern of a negative electrode heteroatom-doped carbon material of various embodiments and control example of the present disclosure.
Fig. 4 is a charge-discharge curve diagram of a negative electrode heteroatom-doped carbon material of various embodiments and control example of the present disclosure.

### DETAILED DESCRIPTION

Common current methods of modifying carbon materials are usually to place the carbon materials, for example, including graphite, carbon nanotubes, graphene or mesocarbon microspheres, in an atmosphere of nitrogen-containing molecular materials or nitrogen-containing molecular substances for a high-temperature nitrogen-doping process. The atmosphere includes, for example, diimine (H₂N₂) or/and ammonia (NH₃), or the molecular-containing substances including amine-containing substances, such as melamine, or/and hydrazine (N₂H₄). However, this process is highly toxic and has a low nitrogen doping amount, and can only be doped with a single element. In addition, to enhance an energy storage effect of carbon material and improve a dispersion of the carbon material in the aqueous colloid, embodiments of the present disclosure provide a non-toxic method of manufacturing a negative heteroatom-doped carbon material, and the method includes a simpler manufacturing process than the related art.

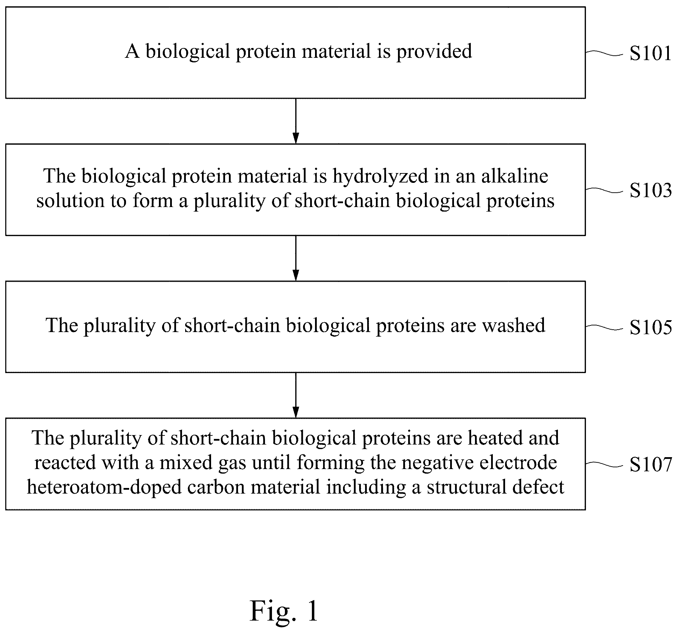

Please refer to Fig. 1. Fig. 1 is a flow chart of a method of manufacturing a negative electrode heteroatom-doped carbon material according some embodiments of the present disclosure.

In step S101, a biocompatible biological protein material is provided. A molecular arrangement of the biological protein material forms a unique secondary structure β-sheet arrangement, and the biological protein material is an organic compound of carbon element, hydrogen element, oxygen element, and nitrogen element. That is, the biological protein material includes the carbon element, the hydrogen element, the oxygen element, the nitrogen element, and so on. In some embodiments, the biological protein material includes silk, wool, spider silk, yeast, soybean protein, corn protein, related animal and plant proteins, or combinations thereof. In some embodiments, biological protein material further includes sulfur element.

In step S103, the biological protein material is hydrolyzed in an alkaline solution. That is, an alkalization process is performed, so that the biological protein material forms a plurality of short-chain biological proteins. In some embodiments, the alkaline solution includes, but is not limited to, a sodium carbonate aqueous solution (Na₂CO_{3(*aq*})) or a sodium hydroxide aqueous solution (NaOH_{(*aq*)}). In some embodiments, a concentration of the alkaline solution is 0.2 molarities (M).

In step S105, the short-chain biological proteins hydrolyzed with the alkaline solution are washed until a pH value of the short-chain biological protein becomes neutral. In some embodiments, the short-chain biological proteins are washed with deionized water (DI-water) and alcohol. In some embodiments, the neutral pH is in a range from 7.0 to 7.4. In some embodiments, the neutral pH value includes 7.0, 7.1, 7.2, 7.3, and 7.4. In some embodiments, the short-chain biological proteins are dried after the pH value of the short-chain biological protein becomes neutral. It is worth mentioning that the alkaline solution used in step S103 affects a consumed time and consumed amounts of the deionized water and the alcohol in step S105 to wash the short-chain biological proteins into neutrality. For example, compared with the sodium hydroxide aqueous solution, the consumed time and the consumed amounts of the deionized water and the alcohol for washing the biological protein materials hydrolyzed through the sodium carbonate aqueous solution into neutrality through sodium carbonate aqueous solution is less.

In step S107, the neutral short-chain biological proteins washed are put into a reaction chamber, and the short-chain biological proteins are heated with a temperature and the reaction chamber is introduced a mixed gas to perform a pyrolysis process on the short-chain biological proteins. The pyrolysis process is performed until forming a negative electrode heteroatom-doped carbon material including a structural defect. In some embodiments, the mixed gas includes nitrogen gas and hydrogen gas. In some embodiments, a percentage of the nitrogen gas in the mixed gas is in a range from 80% to 95%, and a percentage of the hydrogen gas in the mixed is in a range from 5% to 20%. In other embodiments, the mixed gas further includes argon gas and/or other inert gases. In some embodiments, the temperature is in a range from 600°C to 850°C. In some embodiments, the temperature includes 600°C, 610°C, 620°C, 630°C, 640°C, 650°C, 660°C, 670°C, 680°C, 690°C, 700°C, 710°C, 720°C, 730°C, 740°C, 750°C, 760°C, 770°C, 780°C, 790°C, 800°C, 810°C, 820°C, 830°C, 840°C, 850°C, or any value between any two of these values.

In some embodiments, the negative electrode heteroatom-doped carbon material including the structural defect includes the nitrogen element and the hydrogen element. In addition, in some embodiments, "the structural defect" is referred to atomic geometric deviations relative to an ideal crystal lattice structure, such as a carbon material crystal structure. In other words, a crystal structure of the negative electrode heteroatom-doped carbon material causes atoms of a carbon lattice to be arranged in a disordered manner due to doping the nitrogen element and the hydrogen element. In some embodiments, the structural defect includes atomic vacancy defect, atomic interstitial defects, atomic impurity defect, or a combination thereof.

Some embodiments of the present disclosure further provide a negative electrode heteroatom-doped carbon material. The negative electrode heteroatom-doped carbon material includes carbon element, nitrogen element and oxygen element. Based on a total weight of the negative electrode heteroatom-doped carbon material being 100%, a weight percentage of the carbon element is in a range from 77% to 81%, a weight percentage of the nitrogen element is in a range from 8% to 12%, and a weight percentage of the oxygen element is in a range from 4% to 6.5%. In some embodiments, based on the total weight of the negative electrode heteroatom-doped carbon material being 100%, the weight percentage of the carbon element is in the range from 80% to 81%, the weight percentage of the nitrogen element is 12%, and the weight percentage of the oxygen element is 6%. In some embodiments, the negative electrode heteroatom-doped carbon material further includes hydrogen element, and a weight percentage of the hydrogen element is in a range from 1% to 1.5%.

In some embodiments, any one of the carbon element, the nitrogen element and the oxygen element and any one of the carbon element, the nitrogen element and the oxygen element bond with each other to form a polar bond. In some embodiments, the polar bond includes C=N bond, N-O bond, C-O bond, C-N bond or a combination thereof. A functional group of the polar bond on a surface of the negative electrode heteroatom-doped carbon material can interact with hydrogen bonds in aqueous colloid, and the hydrophilicity and the stability of the negative electrode heteroatom-doped carbon material can be effectively increased through the interaction of the hydrogen bonds, thereby achieving uniform dispersion.

In some embodiment, the negative electrode heteroatom-doped carbon material includes a structural defect. In some embodiments, the structural defect includes atomic vacancy defect, atomic interstitial defects, atomic impurity defect, or a combination thereof. In some embodiments, any one of the carbon element, the nitrogen element and the oxygen element and any one of the carbon element, the nitrogen element and the oxygen element bond with each other to form a ring structure. In some embodiments, the ring structure includes a five-ring structure, a seven-ring structure or a combination thereof. The structural defect of the carbon element can provide more active sites, which helps to increase a storage capacity of lithium ions. Additionally, heteroatoms, such as the nitrogen element and the oxygen element, included in the negative electrode heteroatom-doped carbon material including the structural defect have higher electronegativity, which can increase an electric capacity of the material.

In some embodiments, an average particle size of the negative electrode heteroatom-doped carbon material is in a range from 4 microns (µm) to 8 µm. For example, the average particle size of the negative electrode heteroatom-doped carbon material is 6 µm.

Some embodiments of the present disclosure further provide a battery negative electrode. The battery negative electrode includes the mentioned negative electrode heteroatom-doped carbon material, and the negative electrode heteroatom-doped carbon material includes carbon element, nitrogen element and oxygen element. Other features of the negative electrode heteroatom-doped carbon material have been described above and will not be repeated here.

In some embodiments, the battery negative electrode further includes aqueous colloid and conductive carbon black, and the aqueous colloid, the conductive carbon black and the negative electrode heteroatom-doped carbon material are mixed to form negative electrode slurry. In some embodiments, a weight ratio of the negative electrode heteroatom-doped carbon material, the conductive carbon black (Super P) and the aqueous colloid is 48:1:1. In some embodiments, the negative electrode slurry is coated on a substrate, and a coating thickness of the negative electrode slurry is in a range from 50 µm to 100 µm. In some embodiments, the substrate includes copper foil. In some embodiments, the aqueous colloid includes carboxymethyl cellulose (CMC).

A uniformity of distribution of positive electrode particles and negative electrode particles in positive electrode slurry and negative electrode slurry of a battery, such as a lithium batteries effects battery performance. Therefore, the negative electrode heteroatom-doped carbon material in the battery negative electrode provided by the embodiments of the present disclosure includes the polar bond, and the polar bond can effectively make the negative electrode heteroatom-doped carbon material evenly dispersed in an adhesive, thereby improving the battery performance. In addition, the negative electrode heteroatom-doped carbon material including the structural defect can increase the electric capacity of the battery.

The following specific embodiments and control examples are provided to further describe the present disclosure, which are favorable for person having ordinary skill in the art to completely apply and embody the present disclosure. However, the following specific embodiments and control examples should not be regarded as the limitation of the present disclosure but is for describing the material or method of embodying the present disclosure.

### Example

I. A method relates to manufacturing negative electrode heteroatom-doped carbon materials of preparation example and control example.

A method of manufacturing Example 1 of the present disclosure is as follows. Silk fibers were soaked in a sodium carbonate aqueous solution with a concentration of 0.2 M in 90°C for 3 hours, so that the silk fibers were hydrolyzed through an alkalization process to form short-chain biological proteins of the silk fibers. Next, the short-chain biological proteins of the silk fibers were washed by deionized water and alcohol until a pH value of the hydrolyzed short-chain biological proteins of the silk fibers became neutral. Then, the short-chain biological proteins of the silk fibers were dried. Further, the dried short-chain biological proteins of the silk fibers were placed into a reaction chamber. A pyrolysis process was performed on the short-chain biological proteins continuously introducing nitrogen gas and hydrogen gas into the reaction chamber at 650°C for 1 hour, so that the short-chain biological proteins of the silk fibers were formed into the negative electrode heteroatom-doped carbon materials of Example 1. Additionally, a rise rate of the temperature of the reaction chamber, such as a high-temperature reaction furnace, was 2 °C/minute. When the reaction chamber reached 650°C, the dried short-chain biological proteins of the silk fibers were placed into the reaction chamber. In other embodiments and control examples, the short-chain biological proteins were placed into the reaction chamber only when the reaction chamber reached the required temperature, which will not be repeated later.

The difference between the methods of manufacturing Example 2 of Example 1 was that the temperature of the reaction chamber of Example 2 was 800°C. That is, the dried short-chain biological proteins of the silk fibers were placed into the reaction chamber at 800°C. The pyrolysis process was performed on the short-chain biological proteins continuously through introducing the nitrogen gas and the hydrogen gas into the reaction chamber at 800°C for 1 hour, so that the short-chain biological proteins of the silk fibers were formed into the negative electrode heteroatom-doped carbon materials of Example 2.

A method of manufacturing Control example 1 of the present disclosure is as follows. The silk fibers were not hydrolyzed through an alkaline solution, while the silk fibers were directly placed into the reaction chamber. The pyrolysis process was performed on the silk fibers continuously introducing the nitrogen gas and the hydrogen gas into the reaction chamber at 800°C for 1 hour, so that the silk fibers were formed into the negative electrode heteroatom-doped carbon materials of Control example 1.

II. Crystallization characteristics of the negative electrode heteroatom-doped carbon materials of each of Embodiments and Control example were analyzed through X-Ray Diffraction (XRD) pattern and Raman spectrum.

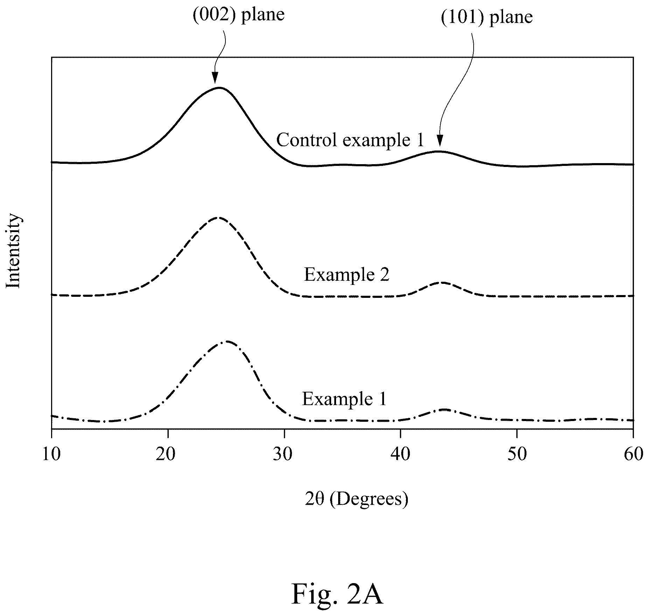

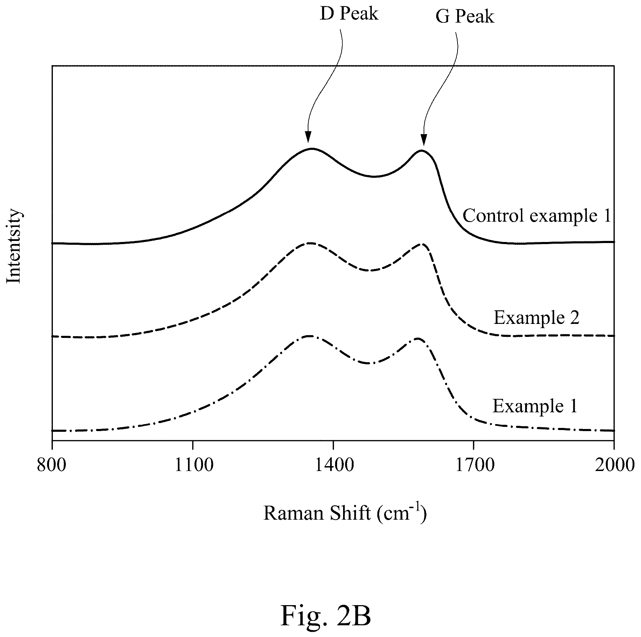

Next, please refer to Figs. 2A and 2B. Fig. 2A is an XRD pattern of a negative electrode heteroatom-doped carbon material of various Embodiments and Control example of the present disclosure, and Fig. 2B is a Raman spectrum pattern of a negative electrode heteroatom-doped carbon material of Embodiments and Control example of the present disclosure.

Since each of positions of each of the diffraction peaks 2θ directly reflects a distance between diffraction crystal planes, among the positions of the diffraction peaks 2θ, 24° and 44° respectively represent the (002) plane and a graphite phase on the (101) plane as shown in Fig. 2A. Three curves in Fig. 2A were the X-ray diffraction curves of the negative electrode heteroatom-doped carbon materials of Example 1, Example 2 and Control example 1, respectively. As shown in Fig. 2A, there was no obvious difference in the crystal phase between Example 1 and 2, washed through the alkaline solution, and Control example 1, not washed through the alkaline solution. Moreover, the diffraction peaks of the (002) plane in Example 1, Example 2 and Control example 1 were all broad peaks, indicating that the crystallinity of each of Example 1, Example 2 and Control example 1 was poor.

Further, a defect degree of the defective structure of each of the negative electrode heteroatom-doped carbon materials was analyzed through Raman spectroscopy. Three curves in Fig. 2B were the Raman spectrum curves of the negative electrode heteroatom-doped carbon materials of Example 1, Example 2 and Control example 1, respectively. As shown in Fig. 2B, the negative electrode heteroatom-doped carbon materials of Example 1, Example 2 and Control example 1 respectively had two Raman bands at 1356 cm⁻¹, a disorder band (D peak), and at 1608 cm⁻¹, a graphite band (G peak). The disorder band, D peak, reflected the defect structure of a carbon lattice, and the graphite band, G peak, reflected a relative content of a complete graphite-type six-membered ring structure.

A ratio (I_{D}/I_{G}) of an intensity (D, I_{D}) of the D peak of Example 1 to an intensity (G, I_{G}) of the G peak of Example 1 was 1.02. A ratio (I_{D}/I_{G}) of an intensity (D, I_{D}) of the D peak of Example 2 to an intensity (G, I_{G}) of the G peak of Example 2 was 1.01. A ratio (I_{D}/I_{G}) of an intensity (D, I_{D}) of the D peak of Control example 1 to an intensity (G, I_{G}) of the G peak of Control example 1 was 1.01. Since the ratio (I_{D}/I_{G}) was inversely proportional to a carbonization degree of particles of the negative electrode heteroatom-doped carbon material, the influence of the temperature of the pyrolysis process, the temperature of the reaction chamber, on the carbonization degree of each of Embodiments and Control example was known through the ratio (I_{D}/I_{G}). Furthermore, the temperature of the pyrolysis process of Example 1 and Example 2 were different, and the ratio (I_{D}/I_{G}) of Example 1 was 1.02 and the ratio (I_{D}/I_{G}) of Example 2 was 1.01, indicating that the carbonization degree of the Example 1 and Example 2 were different. In other words, the carbonization degree of Example 2 was slightly better than the carbonization degree of Example 1. In addition, the temperature of the pyrolysis process of Example 2 was identical to the temperature of the pyrolysis process of Control example 1, and the ratio (I_{D}/I_{G}) of Example 2 and the ratio (I_{D}/I_{G}) of Control example 1 were both 1.01, indicating that the carbonization degrees of Example 2 and Control example 1 were substantially the same. Consequently, each of Embodiments and Control example was affected by the temperature of the pyrolysis process. Moreover, the carbonization degree was calculated through the diffraction peak of the (002) plane in Fig. 2A. Therefore, it may be also known from the diffraction peak of the (002) plane of each of Embodiments and Control example that each of Embodiments and Control example is affected by the temperature of the pyrolysis process.

As shown in Figs. 2A and 2B, since the silk fibers is an organic compound of the carbon element, the hydrogen element, the oxygen element, and the nitrogen element, heteroatoms doped in the carbon materials causes a high structure defect during the pyrolysis process of the silk fibers, thereby forming the negative electrode heteroatom-doped carbon material. In addition, the structure defect includes atomic vacancy defect, atomic interstitial defects, atomic impurity defect, or a combination thereof.

Furthermore, since the ratio (I_{D}/I_{G}) is proportional to the defective degree of the particles of the negative electrode heteroatom-doped carbon material, it may be seen that the defective degree of Example 1 is slightly higher than the defective degree of Example 2.

III. The weight percentages of various elements in each of Embodiments and Control example were analyzed through an elemental analyzer.

The weight percentages (wt.%) of various elements included in the negative electrode hetero-doped carbon materials of Example 1, Example 2 and Control example 1 are as shown in Table 1.

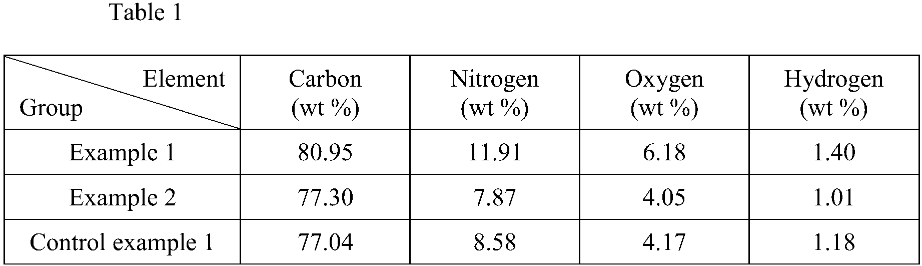

As shown in Table 1, compared to Example 2 and Control example 1, the negative electrode heteroatom-doped carbon material of Example 1 included the highest weight percentage of heteroatoms. That is, the negative electrode heteroatom-doped carbon material of Example 1 included the 11.91 wt.% of the nitrogen element and 6.18 wt.% of the oxygen element. Moreover, combined with the Raman spectrum in Fig. 2B, the reason that Example 1 has a relatively high defect degree is that the negative electrode heteroatom-doped carbon material of Example 1 including higher content of the nitrogen element and the oxygen element. Additionally, the temperature of the pyrolysis process in Example 1 is lower than the temperature of the pyrolysis process in Example 2. Thus, it may be seen that the temperature of the pyrolysis process affects the defect degree of the negative electrode heteroatom-doped carbon material.

Further, when the negative electrode heteroatom-doped carbon material is doped with the heteroatoms, such as the nitrogen element and the oxygen element, a defective carbon, such as a five-ring structure or seven-ring structure, is generated through the heteroatoms. For example, in lithium batteries, the defect structure of defective carbon provided more active sites, thereby helping to increase the storage capacity of lithium ions. In addition, since these heteroatoms, such as the nitrogen element and the oxygen element, have high electronegativity, these heteroatoms served as electron donors. Therefore, the electron transport performance of the electrode material and the pseudocapacitance effect by the electrode surface were improved, forming a rapid and reversible redox reaction to increase the electric capacity of carbon materials. As a result, the five-ring and the seven-ring defective carbons of the negative electrode heteroatom-doped carbon materials form by higher contents of the nitrogen element and the oxygen element may provide more active sites, and the heteroatoms may also increase oxidation, producing a synergistic effect to increase the electric capacity.

IV. Bonding characteristics of the negative electrode heteroatom-doped carbon materials of Embodiments and Control Example.

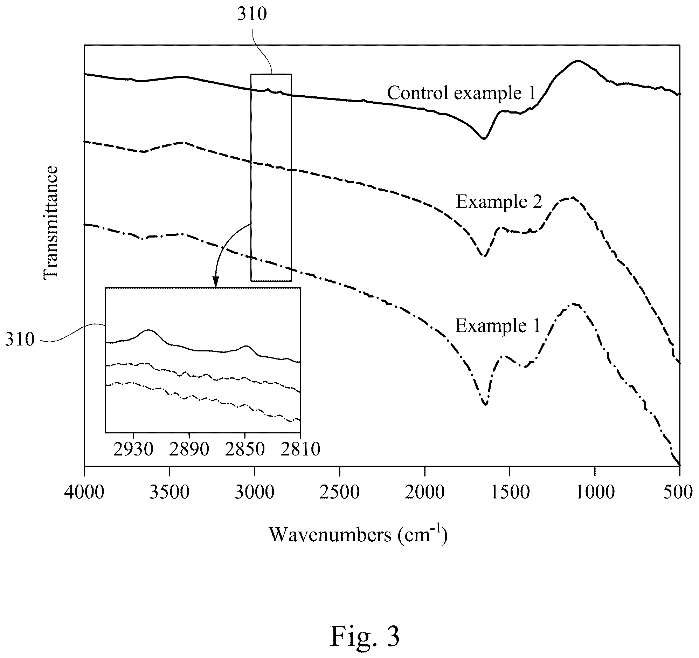

Fourier transform infrared spectroscopy was used to analyze geometric structures and bonding types of the negative electrode heteroatom-doped carbon materials of Example 1, Example 2 and Control Example 1. Please refer to Fig. 3. Fig. 3 is a Fourier transform infrared spectrum chart of the negative electrode heteroatom-doped carbon materials of Example 1, Example 2 and Control Example 1 of the present disclosure.

As shown in Fig. 3, there were clearly four peaks in Example 1 and Example 2, which was respectively the O-H bond or N-H bond at 3472.35 cm⁻¹, the C=C bond or C=N bond at 1539.21 cm⁻¹, N-O bond at 1384.35 cm⁻¹, and C-O bond or C-N bond at 1128.07 cm⁻¹. Further, as shown in an enlarged frame 310 in Fig. 3, compared with Control example 1, it was found that the peak positions at 2918.55 cm⁻¹ and 2850.03 cm⁻¹ were C-H bonds.

The C=N bond, N-O bond, C-O bond, and C-N bond in Example 1 and Example 2 were polar bonds, while the C-H bond in Control example 1 was non-polar bond. Moreover, since Embodiments 1 and 2 were processed through the hydrolysis of sodium carbonate (i.e., alkalization) and reacted at the different temperatures of the pyrolysis process, while Control example 1 was directly performed the pyrolysis process without the hydrolysis of sodium carbonate, the alkalized negative electrode heteroatom-doped carbon materials include only the polar bonds. Moreover, combined with Table 1, it was seen that compared with Example 2 and Control example 1, the content of hydrogen element in Example 1 is higher, and the hydrogen element in Example 1 existed in O-H bond and N-H bond. In addition, Example 2 and Control example 1 were reacted at the same temperature of the pyrolysis process, but Control example 1 was not performed the alkalization process. Therefore, combined with Table 1, it may be seen that the content of hydrogen element of Example 2 is lower than the content of hydrogen element of Control example 1. The reason that the hydrogen content in Example 2 is lower than the hydrogen content in Control example 1 is that there was no C-H bond in Example 2, while the hydrogen element in Control example 1 exists in the C-H bond.

Further, there are lone pairs in these polar bonded oxygen elements and nitrogen elements, and the lone pairs may form the stable hydrogen bonds and interact with positively charged hydrogen ions in water molecules (H₂O). In this way, it may not only facilitate a dispersion of the negative electrode heteroatom-doped carbon materials in an aqueous colloid in Embodiments 1 and 2, but also prevent the negative electrode heteroatom-doped carbon materials of Embodiments 1 and 2 from agglomerating and settlement. Therefore, the stability and uniformity of the negative electrode heteroatom-doped carbon materials in the aqueous colloid of Embodiments 1 and 2 may be maintained.

V. Electric capacity of a lithium-copper half-cell was tested through Example 1 and Control example 2.

Firstly, a method of manufacturing a negative electrode of a lithium-copper half-cell is explained as follows.

The negative electrode heteroatom-doped carbon materials of Example 1 were ground through a planetary ball mill. Specifically, 3 millimeters (mm) zirconia beads and the negative electrode heteroatom-doped carbon materials were placed in a ball milling tank, and the mass concentration ratio of the zirconia beads and the negative electrode heteroatom-doped carbon materials (w/w%) was 1:4.5. Then, the ball milling tank containing the zirconia beads and the negative electrode heteroatom-doped carbon materials was installed in the planetary ball mill, and the negative electrode heteroatom-doped carbon materials were ground at a rotational speed of 400 rpm for two hours until 6 micrometers of the negative electrode heteroatom-doped carbon materials were obtained.

Next, the ground negative electrode heteroatom-doped carbon materials of Example 1, conductive carbon black (Super P), and carboxymethyl cellulose (CMC) as a binder were prepared in a weight ratio of 96:2:2, respectively, to mix slurry for coating. The mixed slurry was coated on copper foil with a coating thickness was in a range from about 50 µm to about 100 µm. Thus, the negative electrode of the lithium-copper half-cell of Embodiment 3 was formed.

Similarly, the carbon materials of Control example 2 were commercially available graphite, and the negative electrode of the lithium-copper half-cell of Control example 2 was formed through the above method of manufacturing lithium-copper half-cell.

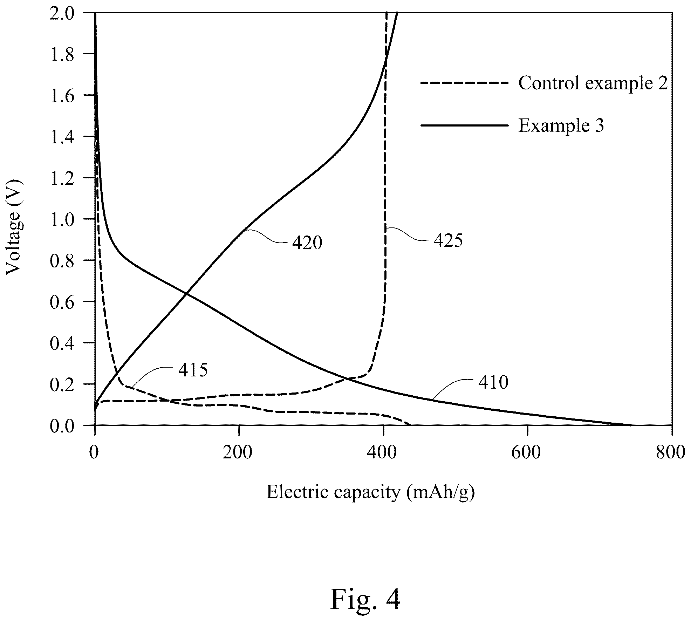

The negative electrode of the lithium-copper half of Embodiment 3 and the negative electrode of the lithium-copper half-cell of Control example 2 respectively combined with a lithium metal compound as a positive electrode were tested the electric capacity of the lithium-copper half-cell, respectively. Further, please refer to Fig. 4. Fig. 4 is a charge-discharge curve diagram of a negative electrode heteroatom-doped carbon material of various embodiments and control example of the present disclosure, in which a current density is 0.1 milliampere-hours/gram (mAh/g).

It was seen from curve 410 and curve 415 that the discharge capacity of the lithium copper half-cell of Embodiment 3 was 725.16 mAh/g, and the discharge capacity of the lithium-copper half-cell of Control example 2 was 434.00 mAh/g. That is, the discharge capacity of the lithium-copper half-cell of Embodiment 3 was significantly better than the discharge capacity of the lithium-copper half-cell of Control example 2. Additionally, it was seen from curve 420 and curve 425 that the charging capacity of the lithium-copper half-cell of Embodiment 3 was 414.11 mAh/g, and the charging capacity of the lithium-copper half-cell of Control example 2 was 404.00 mAh/g. That is, the charging capacity of the lithium-copper half-cell of Embodiment 3 was also better than the charging capacity of the lithium-copper half-cell of Control example 2. Therefore, the negative electrode of the lithium-copper half-cell made of the negative electrode heteroatom-doped carbon materials performed the high electric capacity due to the doping of heteroatoms.

As stated as above, the negative electrode heteroatom-doped carbon material, the method of manufacturing the same and the battery negative electrode using the same provided by the embodiments of the present disclosure generate the negative electrode heteroatom-doped carbon materials including the high contents of the nitrogen element and hydrogen element through the alkalization process and the high-temperature pyrolysis process introducing the nitrogen gas and the hydrogen gas. In addition, due to the presence of the heteroatoms, the electric capacity of the negative electrode heteroatom-doped carbon materials and the battery negative electrode may be increased, and may be used in supercapacitors and field emission devices. Furthermore, the negative electrode heteroatom-doped carbon materials only include the polar bonds instead of the non-polar bond, resulting in the negative electrode heteroatom-doped carbon materials being easily dispersed in the aqueous colloid.

## Claims

1. A method of manufacturing a negative electrode heteroatom-doped carbon material, **characterized by** comprising:
providing a biological protein material, wherein the biological protein material is an organic compound and comprises carbon element, hydrogen element, oxygen element and nitrogen element;
hydrolyzing the biological protein material in an alkaline solution to form a plurality of short-chain biological proteins;
washing the plurality of short-chain biological proteins until a pH value of the plurality of short-chain biological proteins becomes neutral; and
placing the plurality of short-chain biological proteins into a reaction chamber with a temperature for heating, and introducing a mixed gas into the reaction chamber until forming the negative electrode heteroatom-doped carbon material comprising a structural defect, wherein the mixed gas comprises nitrogen gas and hydrogen gas.

2. The method of claim 1, **characterized in that** the negative electrode heteroatom-doped carbon material comprises the doped nitrogen element and the doped oxygen element.

3. The method of claim 1 or 2, **characterized in that** the alkaline solution comprises a sodium carbonate aqueous solution or a sodium hydroxide aqueous solution.

4. The method of any one of claims 1 to 3, **characterized in that** the temperature is in a range from 600°C to 850°C.

5. A negative electrode heteroatom-doped carbon material, **characterized by** comprising:
carbon element;
nitrogen element; and
oxygen element,
wherein a weight percentage of the carbon element is in a range from 77% to 81%, a weight percentage of the nitrogen element is in a range from 8% to 12%, and a weight percentage of the oxygen element is in a range from 4% to 6.5% based on a total weight of the negative electrode heteroatom-doped carbon material being 100%.

6. The negative electrode heteroatom-doped carbon material of claim 5, **characterized in that** any one of the carbon element, the nitrogen element and the oxygen element and any one of the carbon element, the nitrogen element and the oxygen element with each other to form a polar bond.

7. The negative electrode heteroatom-doped carbon material of claim 5 or 6, **characterized in that** the polar bond comprises C=N bond, N-O bond, C-O bond, C-N bond or a combination thereof.

8. The negative electrode heteroatom-doped carbon material of any one of claims 5 to 7, **characterized in that** any one of the carbon element, the nitrogen element and the oxygen element and any one of the carbon element, the nitrogen element and the oxygen element with each other to form a ring structure.

9. The negative electrode heteroatom-doped carbon material of claim 8, **characterized in that** the ring structure comprises a five-ring structure, a seven-ring structure or a combination thereof.

10. The negative electrode heteroatom-doped carbon material of any one of claims 5 to 9, **characterized in that** the negative electrode heteroatom-doped carbon material comprises a structural defect.

11. A battery negative electrode, **characterized by** comprising the negative electrode heteroatom-doped carbon material of any one of claims 5 to 10.

12. The battery negative electrode of claim 11, **characterized by** further comprising:
aqueous colloid; and
conductive carbon black, wherein the aqueous colloid, the conductive carbon black and the negative electrode heteroatom-doped carbon material are mixed to form a negative electrode slurry.

13. The battery negative electrode of claim 12, **characterized in that** a weight ratio of the negative electrode heteroatom-doped carbon material, the conductive carbon black and the aqueous colloid is 48:1:1.

14. The battery negative electrode of claim 12 or 13, **characterized in that** the negative electrode slurry is coated on a substrate, and a coating thickness of the negative electrode slurry is in a range from 50 micrometers to 100 micrometers.

15. The battery negative electrode of any one of claims 12 to 14, **characterized in that** the aqueous colloid comprises carboxymethyl cellulose.
